# EUROPEAN PATENT APPLICATION

(11) **EP 4 376 006 A1**
(43) Date of publication of application: **29.05.2024**
(21) Application number: 23209089.4
(22) Date of filing: 10.11.2023
(51) Int. Cl.: G11C 7/24, G11C 11/406, G11C 11/4078

(54) **MEMORY DEVICE, OPERATING METHOD OF MEMORY DEVICE, AND MEMORY SYSTEM**

(30) Priority: 10.11.2022 KR 20220149884; 29.03.2023 KR 20230041535
(71) Applicant: Samsung Electronics Co., Ltd., Suwon-si, Gyeonggi-do 16677 (KR)
(72) Inventor: PARK, Youngjae, 16677 Suwon-si, Gyeonggi-do (KR); HONG, Seungki, 16677 Suwon-si, Gyeonggi-do (KR); KIM, Hyunbo, 16677 Suwon-si, Gyeonggi-do (KR); CHOI, Insu, 16677 Suwon-si, Gyeonggi-do (KR)
(74) Representative: Kuhnen & Wacker Patent- und Rechtsanwaltsbüro PartG mbB

(57) **Abstract**

Provided is a memory device including a memory cell array including a plurality of memory cell rows, the plurality of memory cell rows being grouped into a plurality of segments, a row decoder connected to the plurality of memory cell rows, and a refresh control circuit configured to generate a refresh control signal for controlling a refresh operation on the plurality of memory cell rows.

## Description

### BACKGROUND

The inventive concepts relate to memory devices, operating methods of memory devices, and memory systems, and more particularly, to methods of refreshing memory cells regardless of whether or not the memory cells are masked when a row hammer attack occurs in a memory device.

Systems using semiconductor chips widely use dynamic random access memory (DRAM) as a working memory or a main memory thereof to store data or instructions used by a host therein and/or to perform a computational operation. In general, DRAM writes data or reads written data under the control by a host. When performing a computational operation, the host retrieves instructions and/or data from the DRAM and executes the instructions and/or uses the data to perform the computational operation. When there is a result of the computational operation, the host writes the result of the computational operation back to the DRAM.

DRAM cell sizes have decreased to increase DRAM capacity and density. Some DRAM-based systems experience intermittent failures due to a heavy workload. Such failures are traced to repeated accesses to a single memory cell row, that is, row hammer. Memory cells connected to a memory cell row physically adjacent to the repeatedly accessed memory cell row may be disturbed by the row hammer, thereby inducing data corruption. The memory cells affected by the row hammer may be refreshed by a target row refresh operation.

To manage the row hammer, DRAM may monitor hammer address(es) that are intensively accessed among access addresses for a certain period of time. The DRAM may store hammer address(es) in defined registers of an address storage, generate, based on the hammer address(es), hammer refresh address(es) indicating address(es) of memory cell row(s) physically adjacent to memory cell row(s) corresponding to the hammer address(es), and target-refresh memory cells connected to the memory cell row(s) corresponding to the hammer refresh address(es).

However, an aggressor may use decoy row hammer address(es) for the purpose of interfering with row hammer management operations of the DRAM. As access addresses including the decoy row hammer address(es) are newly stored in the address storage, the row hammer address(es) stored in the address storage may be evicted from the address storage and the monitored row hammer information may be lost. The evicted hammer address(es) are vulnerable to row hammer.

Accordingly, there is a need for a defense method against row hammer attacks by malicious hackers on memory cell segments.

### SUMMARY

The inventive concepts provide memory devices capable of performing a refresh operation on a masked memory cell array region even when a portion of the memory cell array region is masked.

In addition, the inventive concepts provide memory devices capable of unmasking a masked memory cell region and performing a selective refresh operation in a preset, or desired, period.

According to some aspects of the inventive concepts, there is provided a memory device including a memory cell array including a plurality of memory cell rows, the plurality of memory cell rows being grouped into a plurality of segments, a row decoder connected to the plurality of memory cell rows, and a refresh control circuit configured to generate a refresh control signal for controlling a refresh operation on the plurality of memory cell rows, wherein the refresh control circuit includes a first circuit configured to transmit, to the row decoder, a row hammer segment signal provided from outside of the memory device, a second circuit configured to generate a refresh segment signal indicating a refresh operation on the plurality of segments, and a third circuit configured to generate a segment mask signal based on the row hammer segment signal and the refresh segment signal, and the refresh control circuit is further configured to, in a period during which the refresh segment signal is generated, control the memory cell array to unmask a memory cell region masked by the segment mask signal and selectively perform the refresh operation on the plurality of memory cell rows.

According to some aspects of the inventive concepts, there is provided an operating method of a memory device for defending against a row hammer attack, the operating method including grouping a plurality of memory cell rows into a plurality of segments, generating a refresh control signal for controlling a refresh operation on the plurality of memory cell rows, and performing a refresh operation on the plurality of segments based on the refresh control signal, wherein the generating of the refresh control signal includes generating a row hammer segment signal provided from outside of the memory device, generating a refresh segment signal for indicating a refresh operation on the plurality of segments, and generating a segment mask signal based on the row hammer segment signal and the refresh segment signal, and the performing of the refresh operation on the plurality of segments includes selectively performing the refresh operation on the memory cell rows based on the segment mask signal.

According to some aspects of the inventive concepts, there is provided a memory system including a memory device, and a memory controller configured to transmit a refresh command to the memory device, wherein the memory device includes a memory cell array including a plurality of memory cell rows, the plurality of memory cell rows being grouped into a plurality of segments, a row decoder connected to the plurality of memory cell rows, and a refresh control circuit configured to generate a refresh control signal for controlling a refresh operation on the plurality of memory cell rows, based on the refresh command, wherein the refresh control circuit includes a first circuit configured to generate a row hammer segment signal provided from outside of the memory device, a second circuit configured to generate a refresh segment signal for indicating a refresh operation on the plurality of segments, and a third circuit configured to generate a segment mask signal based on the row hammer segment signal and the refresh segment signal, and the refresh control circuit is further configured to selectively perform the refresh operation on the plurality of memory cell rows based on the segment mask signal.

### BRIEF DESCRIPTION OF THE DRAWINGS

Example embodiments will be more clearly understood from the following detailed description taken in conjunction with the accompanying drawings in which:
FIG. 1 is a block diagram of a memory system according to some example embodiments;
FIG. 2 is a block diagram of a memory device according to some example embodiments;
FIG. 3 is a block diagram of a control circuit according to some example embodiments;
FIG. 4 is a block diagram of a row decoder according to some example embodiments;
FIG. 5A is a diagram illustrating a segment according to some example embodiments;
FIG. 5B is a diagram illustrating masking information of a segment according to some example embodiments;
FIG. 6 is a timing diagram of a refresh operation according to some example embodiments;
FIGS. 7 and 8 are conceptual diagrams illustrating a refresh operation according to some example embodiments;
FIG. 9 is a flowchart of an operating method of a memory device according to some example embodiments;
FIGS. 10 and 11 are flowcharts illustrating a refresh operation of a memory device according to some example embodiments;
FIG. 12 is a flowchart illustrating a process of resetting a segment in an operating method of a memory device, according to some example embodiments;
FIG. 13 is a flowchart illustrating a process of performing a refresh operation on rows adjacent to a row hammer address in an operating method of a memory device, according to some example embodiments;
FIG. 14 is a block diagram illustrating a computer system to which a memory device according to some example embodiments is applied;
FIG. 15 is a diagram illustrating a memory device for controlling row hammer, according to some example embodiments; and
FIG. 16 is a block diagram illustrating a system including a memory device for controlling row hammer according to some example embodiments.

### DETAILED DESCRIPTION

Terms used herein are described briefly, and example embodiments are described in detail.

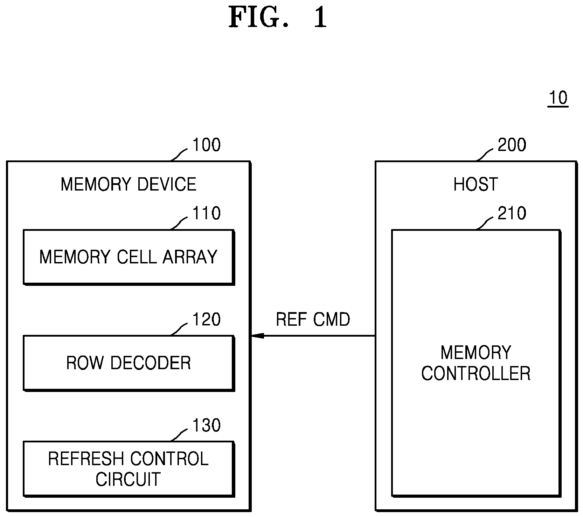

FIG. 1 is a block diagram of a memory system 10 according to some example embodiments.

Referring to FIG. 1, the memory system 10 according to some example embodiments may include a memory device 100 and a host 200.

The memory device 100 according to some example embodiments may include a memory cell array 110, a row decoder 120, and a refresh control circuit 130, receive a refresh command REF_CMD from the host 200, and perform a refresh operation on a plurality of segments included in the memory cell array 110.

The memory cell array 110 according to some example embodiments may include a plurality of memory cell rows (not shown), and the plurality of memory cell rows may be grouped into a plurality of segments. The segments according to some example embodiments may be sets of memory cell rows grouped according to a preset (or, alternatively, desired or determined) criterion. The memory cell array 110 may include a plurality of word lines, a plurality of bit lines, and a plurality of memory cells formed at points at which the word lines and the bit lines cross each other. The memory cells of the memory cell array 110 may be volatile memory cells, for example, dynamic random access memory (DRAM) cells.

The row decoder 120 according to some example embodiments may be connected to the memory cell rows. For example, the row decoder 120 may be arranged to correspond to a plurality of banks of the memory cell array 110. The row decoder 120 according to some example embodiments may decode a row address received from a control logic circuit described below, select a word line corresponding to the row address, from among the plurality of word lines, and connect the selected word line to a word line driver that activates the word line. For example, the row decoder 120 may inactivate some word lines of the memory cell array 110 based on a segment mask signal and activate word lines included in rows determined not to be masked.

The refresh control circuit 130 according to some example embodiments may be configured to transmit, to the row decoder 120, a row hammer segment signal provided from the outside of the memory device 100. For example, the refresh control circuit 130 may include a first circuit that transmits, to the row decoder 120, a row hammer segment signal provided from the outside. The first circuit according to some example embodiments may be a partial array self refresh (PASR) control circuit or a partial array refresh control (PARC) circuit. For example, the first circuit may use a portion of a memory cell row as a refresh region and perform a refresh operation on the portion thereof. The refresh region according to some example embodiments may be a segment that is not masked.

The refresh control circuit 130 according to some example embodiments may be configured to generate a refresh segment signal for indicating a refresh operation on the plurality of segments. For example, the refresh control circuit 130 may include a second circuit that generates a refresh segment signal for indicating a refresh operation on the plurality of segments. The second circuit according to some example embodiments may be a normal refresh circuit described below. The refresh control circuit 130 according to some example embodiments may perform a refresh operation on segments masked through the second circuit.

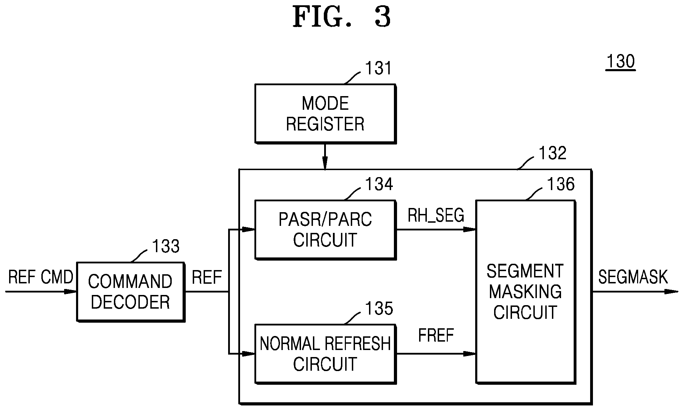

The refresh control circuit 130 according to some example embodiments may be configured to generate a segment mask signal based on the row hammer segment signal and the refresh segment signal. For example, the refresh control circuit 130 may include a third circuit that generates a segment mask signal based on the row hammer segment signal and the refresh segment signal. The third circuit according to some example embodiments may be a segment mask control circuit. The third circuit according to some example embodiments is configured to generate a segment mask signal based on the row hammer segment signal and the refresh segment signal transmitted from the first circuit and the second circuit, respectively. For example, the first circuit may generate the row hammer segment signal and the second circuit may generate the refresh segment signal. The first circuit according to some example embodiments may be a partial array self refresh (PASR) control circuit or a partial array refresh control (PARC) circuit. The second circuit according to some example embodiments may be a normal refresh circuit. For example, the third circuit may control the segment mask signal so that a refresh operation is performed on a masked portion of a memory cell array in a preset (or, alternatively, desired or determined) period. The refresh control circuit 130 according to some example embodiments may selectively perform a refresh operation on memory cell rows based on the segment mask signal. For example, the refresh control circuit 130 may perform a refresh operation regardless of whether segments are masked or not in the preset (or, alternatively, desired or determined) period and perform a refresh operation on memory cell rows excluding masked segments in other periods. A description of the refresh control circuit 130 according to some example embodiments is described in detail with reference to FIG. 3.

The memory device 100 of the memory system 10 according to some example embodiments may include DRAM such as double data rate synchronous DRAM (DDR SDRAM), low power DDR (LPDDR) SDRAM, graphics DDR (GDDR) SDRAM, or Rambus DRAM (RDRAM).

The host 200 according to some example embodiments may include a computing system such as a computer, a laptop computer, a server, a workstation, a portable communication terminal, a personal digital assistant (PDA), a portable multimedia player (PMP), a smartphone, or a wearable device. In addition, the host 200 according to some example embodiments may include some of components included in a computing system such as a graphics card.

The host 200 may be a functional block that performs general computer operations within the memory system 10 and correspond to a central processing unit (CPU), a digital signal processor (DSP), a graphics processing unit (GPU), or an application processor (AP). The host 200 according to some example embodiments may include a memory controller 210 that manages data transmission/reception to/from the memory device 100.

The memory controller 210 according to some example embodiments may access the memory device 100 according to a request of the host 200. For example, the memory controller 210 may transmit the refresh command REF_CMD to the memory device 100 based on a request of the host 200. The memory controller 210 according to some example embodiments may include a memory physical layer interface (PHY) for interfacing with the memory device 100, such as selecting a row and a column corresponding to a memory location, writing data to a memory location, or reading written data. The memory PHY may include a physical or electrical layer and a logical layer provided for signals, frequencies, timing, driving, detailed operating parameters, and functionality required for efficient communication between the memory controller 210 and the memory device 100. The memory PHY may support features of a DDR and/or LPDDR protocol of the Joint Electron Device Engineering Council (JEDEC) standard.

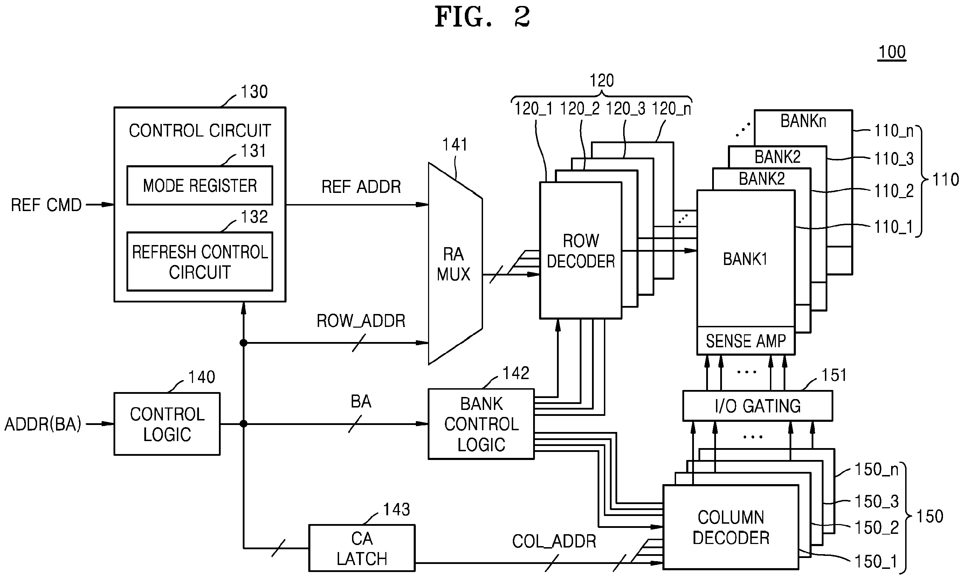

FIG. 2 is a block diagram of the memory device 100 according to some example embodiments.

Referring to FIG. 2, the memory device 100 according to some example embodiments may include the memory cell array 110, a plurality of row decoders 120_1 to 120_n, a control circuit 130, a control logic circuit 140, a row address selector (RA MUX) 141, a bank control logic 142, a column address latch 143, a plurality of column decoders 150_1 to 150_n, and an input/output (I/O) gating circuit 151.

The memory cell array 110 according to some example embodiments may include a plurality of banks 110_1 to 110_n, and a plurality of sense amplifiers corresponding to the plurality of banks 110_1 to 110_n may be arranged.

The control logic circuit 140 may receive an address ADDR including a bank address BA, a row address ROW_ADDR, and a column address COL_ADDR from the memory controller 210. The control logic circuit 140 may provide the received bank address BA to the bank control logic 142, provide the received row address ROW _ADDR to the row decoder 120, and provide the received column address COL_ADDR to the column decoder 150.

The memory cell array 110 includes a plurality of memory cells provided in the form of a matrix including rows and columns. The memory cell array 110 includes a plurality of word lines and a plurality of bit lines connected to the memory cells. The plurality of word lines WL may be connected to rows of memory cells, and the plurality of bit lines BL may be connected to columns of memory cells. Data of memory cells connected to an activated word line WL may be sensed and amplified by sense amplifiers connected to the bit lines BL.

The memory cell array 110 may include first to nth banks BANK1 to BANKn: 110_1 to 1 10_n. The bank control logic 142 may generate bank control signals in response to a bank address, and in response to the bank control signals, the row decoder 120 and the column decoder 150 of a bank corresponding to the bank address, among the first to nth banks BANK1 to BANKn: 110_1 to 110_n, may be activated. Although an example of the memory device 100 including n banks is illustrated in some example embodiments, the memory device 100 may include any number of banks according to example embodiments.

The row decoder 120 and the column decoder 150 may be arranged to correspond to each of the first to nth banks BANK1 to BANKn: 110_1 to 110_n, and the row decoder 120 and the column decoder 150 connected to a bank corresponding to a bank address may be activated. The row decoder 120 may decode the received row address ROW _ADDR, select a word line WL corresponding to the row address ROW ADDR, from among the plurality of word lines WL, and connect the selected word line WL to a word line driver that activates the word line WL.

The column decoder 150 may select certain bit lines BL among the plurality of bit lines BL of the memory cell array 110. The column decoder 150 may decode burst addresses that are gradually increased by +1 based on the column address COL_ADDR in a burst mode to generate a column select signal, and connect bit lines BL selected by the column select signal to the I/O gating circuit 151. The burst addresses refer to addresses of column locations that may be accessed in relation to a burst length for read and/or write commands.

The I/O gating circuit 151 may include read data latches for storing read data of the bit lines BL selected by the column select signal and a write driver for writing write data to the memory cell array 110. The read data stored in the read data latches of the I/O gating circuit 151 may be provided to a data bus.

The control circuit 130 may receive a clock signal and a command and generate control signals for controlling an operation timing and/or a memory operation of the memory device 100. The control circuit 130 may provide the control signals to circuits of the memory device 100 so that the memory device 100 operates according to operation and control parameters stored by a mode register set (MRS). The control circuit 130 may read data from the memory cell array 110 and write data to the memory cell array 110 by using the control signals.

The control circuit 130 may control a refresh operation on the memory cell array 110 to be performed in a preset (or, alternatively, desired or determined) period to defend against a row hammer attack, in which a memory cell row is intensively accessed, during a row hammer monitoring time frame.

FIG. 3 is a block diagram of the control circuit 130 according to some example embodiments.

Referring to FIG. 3, the control circuit 130 according to some example embodiments may include a mode register 131, a refresh control circuit 132, and a command decoder 133. In addition, the refresh control circuit 132 may include a first circuit 134, a second circuit 135, and a third circuit 136. The first circuit 134 according to some example embodiments may be a PASR control circuit or a PARC circuit. The second circuit 135 according to some example embodiments may be a normal refresh circuit. The third circuit 136 according to some example embodiments may be a segment masking circuit.

The mode register 131 according to some example embodiments may store preset (or, alternatively, desired or determined) information on memory cell rows. For example, the mode register 131 may store (and, for example, may update, by received instructions or other methods) a refresh period or segment mask information for the memory cell rows. Based on the period stored in the mode register 131, the refresh control circuit 132 may control the memory device 100 to perform a refresh operation on the memory cell rows in a preset (or, alternatively, desired or determined) period. In addition, the refresh control circuit 132 may perform a refresh operation on only some segments of the memory cell rows, based on preset (or, alternatively, desired or determined) segment masking information, and update segment information.

By including the first circuit 134, the second circuit 135, and the third circuit 136, the refresh control circuit 132 according to some example embodiments may perform a selective refresh operation on memory cell rows. For example, the refresh control circuit 132 may compare outputs of the first circuit 134 and the second circuit 135 and generate a segment mask signal SEGMASK. In addition, the refresh control circuit 132 may transmit the generated segment mask signal SEGMASK to the row decoder 120. The segment mask signal SEGMASK according to some example embodiments may be a signal indicating a masking operation on memory cell rows. For example, when masking information included in the segment mask signal SEGMASK indicates a masking operation on rows 0 to 3 among memory cell rows, a refresh operation may be performed only on rows other than the rows 0 to 3 among the memory cell rows.

The refresh control circuit 132 according to some example embodiments may be configured to stop outputting a row hammer segment signal RH_SEG in a preset (or, alternatively, desired or determined) period. For example, when the preset (or, alternatively, desired or determined) period is reached, the refresh control circuit 132 according to some example embodiments may be configured to stop outputting the row hammer segment signal RH_SEG and transmit a refresh segment signal FREF to the row decoder 120. The refresh segment signal FREF may be transmitted with a logic value of LOW. According to some example embodiments, when the logic value of the refresh segment signal FREF is LOW and the output of the row hammer segment signal RH_SEG is stopped, the segment mask signal SEGMASK may not be output.

That is, by generating the refresh segment signal FREF in the preset (or, alternatively, desired or determined) period, the refresh control circuit 132 may perform a refresh operation on memory cell rows on which a masking operation has been performed. The preset (or, alternatively, desired or determined) period may be differently set according to information of the memory device 100. For example, even when a memory cell row subjected to a row hammer attack is masked in the preset (or, alternatively, desired or determined) period, the refresh control circuit 132 may unmask the memory row cell and perform a refresh operation thereon in a period during which the refresh segment signal FREF is transmitted.

When a preset (or, alternatively, desired or determined) segment corresponds to a row hammer address, the refresh control circuit 132 according to some example embodiments may be configured to transmit the refresh segment signal FREF to the row decoder 120. For example, when a row hammer attack occurs in a memory cell row masked based on the row hammer segment signal RH_SEG, the refresh control circuit 132 may ignore the masking information and perform a refresh operation on the memory cell row on which the row hammer attack is performed.

When a preset (or, alternatively, desired or determined) period has elapsed, the refresh control circuit 132 according to some example embodiments may be configured to update the row hammer segment signal RH_SEG and reset the preset (or, alternatively, desired or determined) segment based on the updated row hammer segment signal RH_SEG. For example, when the preset (or, alternatively, desired or determined) period has elapsed, the refresh control circuit 132 may unmask segments on which a masking operation has been performed, based on the refresh segment signal FREF, perform a refresh operation on the unmasked segments, and reset a masking region among memory cell rows. When the masking region is reset, the refresh control circuit 132 according to some example embodiments may perform a refresh operation on the memory cell rows based on the updated row hammer segment signal RH_SEG. In addition, when the preset (or, alternatively, desired or determined) period has elapsed again, the refresh control circuit 132 according to some example embodiments may unmask masked segments, based on the refresh segment signal FREF, perform a refresh operation on the unmasked segments, and reset a masking region among the memory cell rows, thereby continuously changing information of masked segments.

When the row hammer segment signal RH_SEG is updated, the refresh control circuit 132 according to some example embodiments may be configured to control whether or not to activate at least one of the memory cell rows, based on the updated row hammer segment signal RH_SEG. For example, the refresh control circuit 132 may transmit the updated row hammer segment signal RF_SEG to the row decoder 120, and the row decoder 120 may deactivate a segment that is set as a masking region, among the memory cell rows, based on the updated row hammer segment signal RH_SEG. In addition, the refresh control circuit 132 may activate memory cell rows that are not masked.

The refresh control circuit 132 according to some example embodiments may be configured to stop outputting the updated row hammer segment signal RH_SEG in a preset (or, alternatively, desired or determined) period and output the refresh segment signal FREF. In addition, the refresh control circuit 132 according to some example embodiments may be configured to perform a refresh operation excluding a masking region among the memory cell rows. For example, the refresh control circuit 132 may perform a refresh operation on the memory cell rows excluding a masked region, based on the row hammer segment signal RH_SEG, until the preset (or, alternatively, desired or determined) period elapses. However, in the preset (or, alternatively, desired or determined) period, the refresh control circuit 132 may stop outputting the row hammer segment signal RF_SEG and output the refresh segment signal FREF, to unmask a masked memory cell row region and perform a refresh operation thereon. The preset (or, alternatively, desired or determined) period according to some example embodiments may be determined based on performance, information, or user settings of the memory device 100.

When a preset (or, alternatively, desired or determined) segment corresponds to a row hammer address, the refresh control circuit 132 according to some example embodiments may be configured to perform a refresh operation on rows adjacent to a row corresponding to the row hammer address. When a row hammer attack is performed on a specific memory cell row, a change in electric charge quantity in a memory cell row region may also affect memory cell row regions adjacent thereto. By performing the refresh operation on the rows adjacent to the row corresponding to the row hammer address, the refresh control circuit 132 according to some example embodiments may pursue stability of adjacent memory cell rows. For example, when a row hammer attack occurs in an Nth row, the refresh control circuit 132 may control a refresh operation to be performed also on a N+1th row and a N-1th row. However, rows adjacent to the Nth row are not limited to the N+1th row and the N-1th row, and may further include memory cell rows that may be affected by electrical characteristics.

The refresh control circuit 132 according to some example embodiments may be configured to perform an operation of a NOR gate that distinguishes between the row hammer segment signal RF_SEG and the refresh segment signal FREF. For example, by performing the operation of the NOR gate, the refresh control circuit 132 may output the segment mask signal SEGMASK when a logic value of the row hammer segment signal RH_SEG is LOW and a logic value of the refresh segment signal FREF is LOW. That is, the refresh control circuit 132 according to some example embodiments may perform a masking operation on memory cell rows when it is determined that a row hammer attack has not occurred and a refresh operation on a masked region is not required. For example, the refresh control circuit 132 may determine that there is no need for a refresh operation on the masked region before a preset (or, alternatively, desired or determined) period elapses and perform a masking operation on the memory cell rows.

The refresh control circuit 132 according to some example embodiments may further include a counter (not illustrated) for counting a preset (or, alternatively, desired or determined) period.

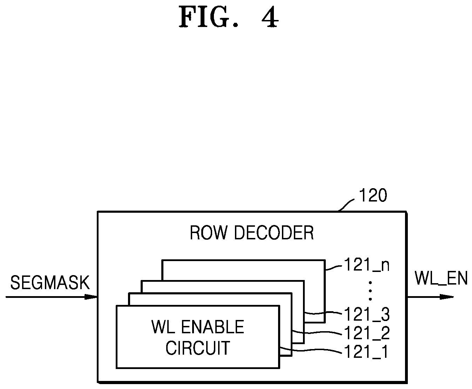

FIG. 4 is a block diagram of the row decoder 120 according to some example embodiments.

Referring to FIG. 4, the row decoder 120 according to some example embodiments may include a plurality of word line enable circuits 121_1 to 121_n that respectively correspond to a plurality of banks present in the memory cell array 110. The word line enable circuits 121_1 to 121_n according to some example embodiments may control whether or not to activate word lines present in each of the plurality of banks. For example, the refresh control circuit 132 may transmit the row hammer segment signal RF_SEG to the row decoder 120, and the row decoder 120 may generate a word line enable signal WL_EN based on the updated row hammer segment signal RH_SEG. The memory device 100 according to some example embodiments may deactivate a word line that is set as a masking region, among the memory cell rows, based on the word line enable signal WL _EN, and the refresh control circuit 132 may activate word lines that are not masked.

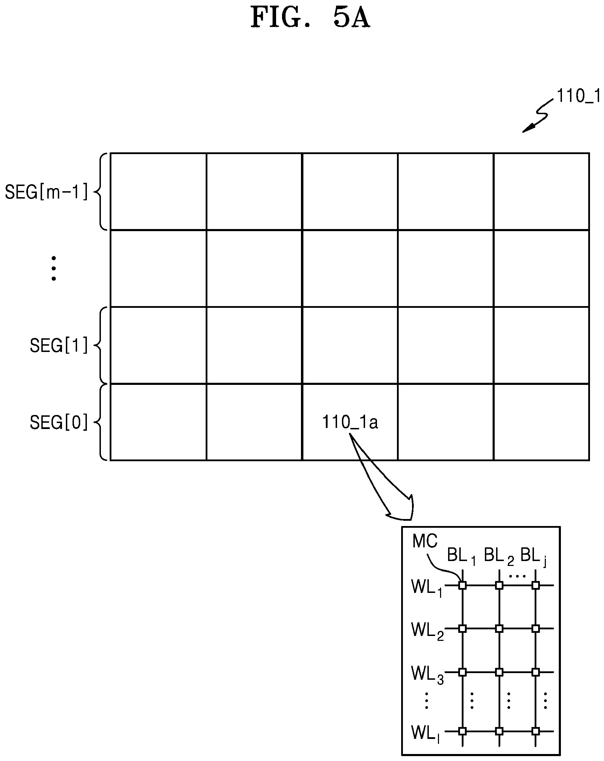

FIG. 5A is a diagram illustrating a segment according to some example embodiments.

Referring to FIG. 5A, the memory cell array 110 according to some example embodiments may include a plurality of banks. Hereinafter, in FIG. 5A, among the plurality of banks, a first bank 110_1 according to some example embodiments is described. However, the plurality of banks may have the same or similar technical features as the first bank 110_1 and constitute the memory cell array 110.

The first bank 110_1 according to some example embodiments may include a plurality of segments, for example, first to mth segments SEG[0] to SEG[m-1]. A segment according to some example embodiments may include a plurality of word lines, a plurality of bit lines, and memory cells. For example, a first region 110_1a of the first segment SEG[0] may include a plurality of word lines WL1 to WLi, a plurality of bit lines BL1 to BLj, and memory cells MC. Segments according to some example embodiments may have the same or similar technical features as the first segment SEG[0] and constitute the memory cell array 110.

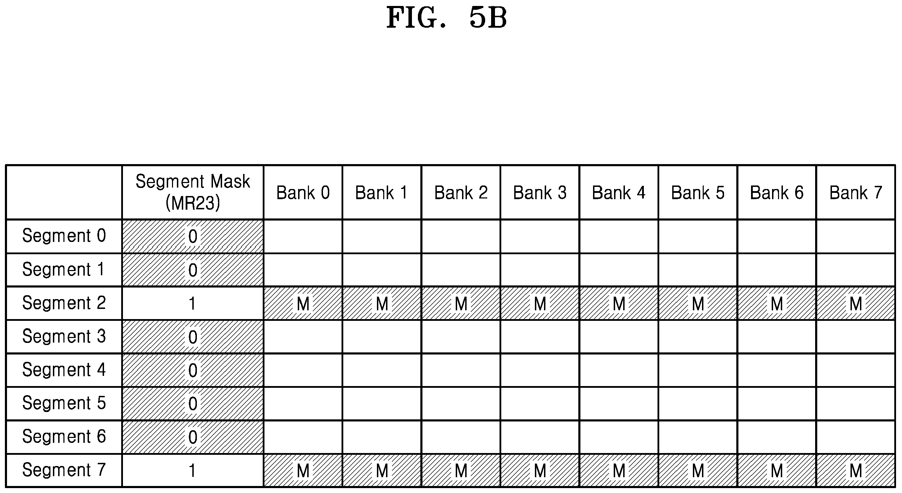

FIG. 5B is a diagram illustrating masking information of a segment according to some example embodiments.

Referring to FIG. 5B, the memory device 100 according to some example embodiments may perform a masking operation on preset (or, alternatively, desired or determined) segments based on the segment mask signal SEGMASK. When an example segment mask signal SEGMASK: MR23 indicates to mask a third segment Segment2 and an eighth segment Segment7, the third segment Segment2 and the eighth segment Segment? among a plurality of banks Bank0 to Bank? included in the memory cell array 110 may be masked.

The memory device 100 according to some example embodiments may perform a refresh operation excluding masked segments. That is, by masking some of the segments, the memory device 100 may selectively perform a refresh operation. However, as described above, when a row hammer attack is performed on a masked region, the memory device 100 according to some example embodiments may also perform a refresh operation on the masked segments. In addition, the memory device 100 according to some example embodiments may also perform a refresh operation on the masked segments in a preset (or, alternatively, desired or determined) period to defend against a row hammer attack that occurs unexpectedly. Additionally, by using the above example embodiments, data may be more securely stored and the ability of malicious actors to access sensitive data, confidential data, technical data, etc., of the storage devices may be decreased and/or have reduced ability. Therefore, the improved devices and methods overcome the deficiencies of the conventional devices and methods to row hammer protection while reducing resource consumption and increasing data clarity/security. For example, by using the disclosed methods, the refresh of data, and more specifically, masked data, may be possible and require fewer resources, such as memory access and/or power to drive circuitry to protect stored data.

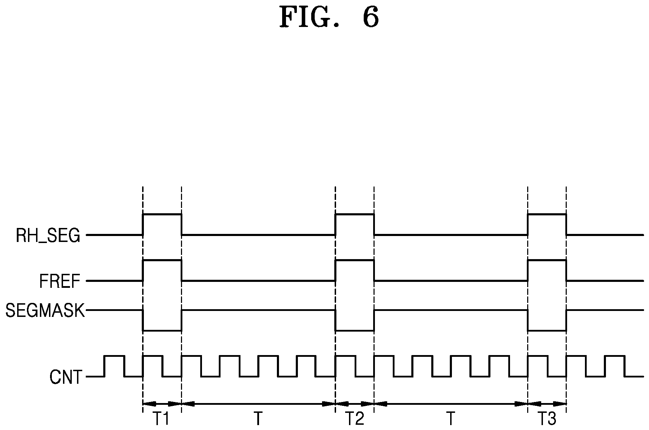

FIG. 6 is a timing diagram of a refresh operation according to some example embodiments. The CNT according to some example embodiments may be a clock signal for determining cycles of signals provided in the present disclosure.

Referring to FIG. 6, in a preset (or, alternatively, desired or determined) period, the memory device 100 according to some example embodiments may unmask masked segments based on the row hammer segment signal RH_SEG and the refresh segment signal FREF and perform a refresh operation.

For example, in a first period T1, the memory device 100 may generate logic values of the row hammer segment signal RH_SEG and the refresh segment signal FREF to be HIGH and stop outputting the segment mask signal SEGMASK. When the output of the segment mask signal SEGMASK is stopped, the memory device 100 according to some example embodiments may also perform a refresh operation on previously masked segments.

When the first period T1 has elapsed, the memory device 100 according to some example embodiments may maintain the logic values of the row hammer segment signal RH_SEG and the refresh segment signal FREF to be LOW. When the logic values of the row hammer segment signal RH_SEG and the refresh segment signal FREF are maintained to be LOW, the segment mask signal SEGMASK according to some example embodiments may be output and preset (or, alternatively, desired or determined) segments may be masked. When the segment mask signal SEGMASK is output, the memory device 100 according to some example embodiments may perform a refresh operation excluding the masked segments.

When a preset (or, alternatively, desired or determined) time T has elapsed, in a second period T2, the memory device 100 according to some example embodiments may generate logic values of the row hammer segment signal RH_SEG and the refresh segment signal FREF to be HIGH and stop outputting the segment mask signal SEGMASK. The memory device 100 according to some example embodiments may update information on a segment to be masked later in the second period T2. For example, the memory device 100 may generate an updated row hammer segment signal RH_SEG.

When the second period T2 has elapsed, the memory device 100 according to some example embodiments may maintain the logic values of the row hammer segment signal RH_SEG and the refresh segment signal FREF to be LOW again. The row hammer segment signal RF_SEG generated after the second period T2 and before a third period T3 may be an updated signal, and the segment mask signal SEGMASK output after the second period T2 and before the third period T3 may also be updated. Based on the updated segment mask signal SEGMASK, the memory device 100 may unmask segments masked in the previous period and perform a masking operation on new segments. When the segment mask signal SEGMASK is output, the memory device 100 according to some example embodiments may perform a refresh operation excluding the masked segments.

When the preset (or, alternatively, desired or determined) time T has elapsed, in the third period T3, the memory device 100 according to some example embodiments may generate logic values of the row hammer segment signal RH_SEG and the refresh segment signal FREF to be HIGH again and stop outputting the segment mask signal SEGMASK.

By repeating the above process, the memory device 100 according to some example embodiments may periodically perform a refresh operation on masked segments as well.

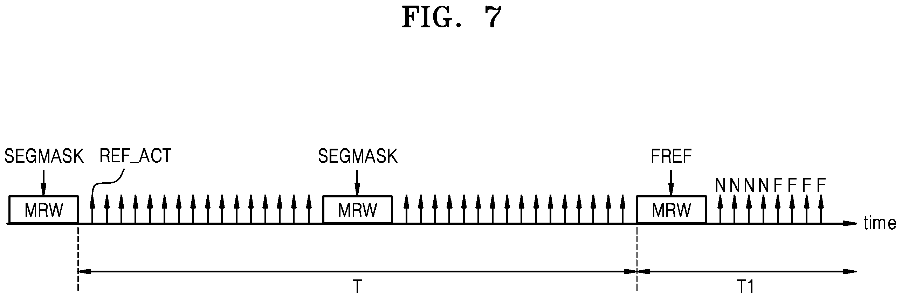

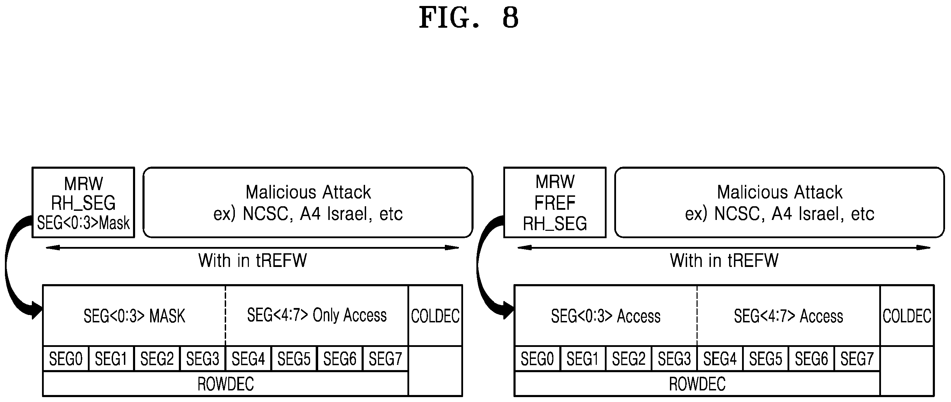

FIGS. 7 and 8 are conceptual diagrams illustrating a refresh operation according to some example embodiments.

Referring to FIG. 7, when the memory device 100 according to some example embodiments receives a write command MRW, logic values of the row hammer segment signal RH_SEG and the refresh segment signal FREF may be maintained to be LOW for the preset (or, alternatively, desired or determined) time T. When the logic values of the row hammer segment signal RF_SEG and the refresh segment signal FREF are maintained to be LOW, the segment mask signal SEGMASK according to some example embodiments may be output and preset (or, alternatively, desired or determined) segments may be masked. When the segment mask signal SEGMASK is output, the memory device 100 according to some example embodiments may perform a refresh operation excluding masked segments, based on a refresh activation signal REF_ACT.

When the preset (or, alternatively, desired or determined) time T has elapsed, in the first period T1, the memory device 100 may generate logic values of the row hammer segment signal RH_SEG and the refresh segment signal FREF to be HIGH and stop outputting the segment mask signal SEGMASK. When the output of the segment mask signal SEGMASK is stopped, the memory device 100 according to some example embodiments may also perform a refresh operation on previously masked segments. For example, the memory device 100 may perform a refresh operation on masked segments by generating a selective refresh signal F and perform a refresh operation on non-masked segments by generating a normal refresh signal N.

Referring to FIG. 8, when the memory device 100 according to some example embodiments receives the write command MRW, only the logic value of the row hammer segment signal RF_SEG may be set to HIGH and a masking operation may be performed on first to fourth segments SEG0 to SEG3. Even when a malicious attack occurs in a write refresh operation period tREFW, the memory device 100 according to some example embodiments may perform a refresh operation only on fifth to eighth segments SEG4 to SEG7.

However, in the case in which the memory device 100 receives the write command MRW, when the logical values of the row hammer segment signal RH_SEG and the refresh segment signal FREF are set to HIGH and the segment mask signal SEGMASK is not output, a refresh operation may also be performed on the first to fourth segments SEG0 to SEG3. Even when a malicious attack occurs in the write refresh operation period tREFW, the memory device 100 according to some example embodiments may perform a refresh operation on all of the first to eighth segments SEG0 to SEG7.

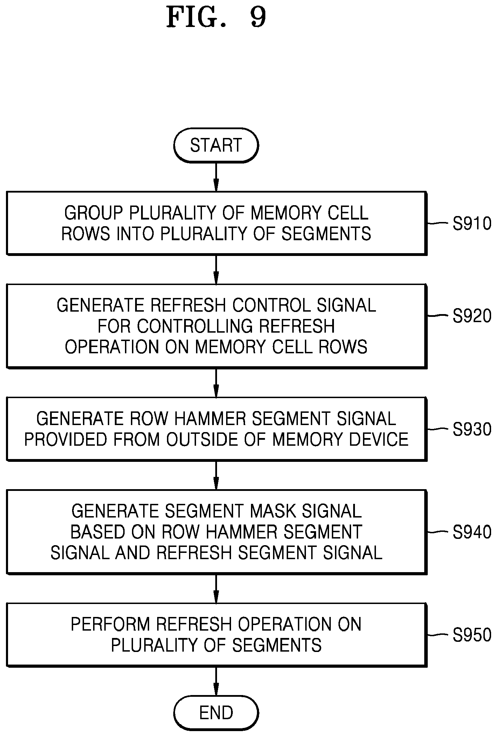

FIG. 9 is a flowchart of an operating method of a memory device according to some example embodiments.

Referring to FIG. 9, in the memory device 100 according to some example embodiments, a plurality of memory cell rows may be grouped into a plurality of segments (S910).

When the plurality of memory cell rows are grouped into the plurality of segments, the memory device 100 according to some example embodiments may generate a refresh control signal for controlling a refresh operation on the memory cell rows (S920).

The memory cell array 110 of the memory device 100 according to some example embodiments may include a plurality of memory cell rows, and the plurality of memory cell rows may be grouped into a plurality of segments. A segment according to some example embodiments may include a plurality of word lines, a plurality of bit lines, and a plurality of memory cells formed at points at which the word lines and the bit lines cross each other. The memory cells of the memory cell array 110 may be volatile memory cells, for example, DRAM cells.

When the refresh control signal is generated, a row hammer segment signal provided from the outside of the memory device 100 may be generated (S930). The row hammer segment signal according to some example embodiments may be a PASR control signal or a PARC signal. For example, the row hammer segment signal may control the memory device 100 to use a portion of a memory cell row as a refresh region and perform a refresh operation on the portion thereof. The refresh region according to some example embodiments may be a segment that is not masked.

When the row hammer segment signal is generated, the memory device 100 according to some example embodiments may generate a segment mask signal based on the row hammer segment signal and a refresh segment signal (S940). For example, when a logic value of the row hammer segment signal is LOW and a logic value of the refresh segment signal is LOW, the segment mask signal SEGMASK may be generated and output.

When the segment mask signal is generated, the memory device 100 according to some example embodiments may perform a refresh operation on the plurality of segments (S950). For example, the memory device 100 may perform a refresh operation excluding masked segments. That is, by masking some of the segments, the memory device 100 may selectively perform a refresh operation. However, when a row hammer attack is performed on a masked region, the memory device 100 according to some example embodiments may also perform a refresh operation on the masked segments. In addition, the memory device 100 according to some example embodiments may also perform a refresh operation on the masked segments in a preset (or, alternatively, desired or determined) period to defend against a row hammer attack that occurs unexpectedly.

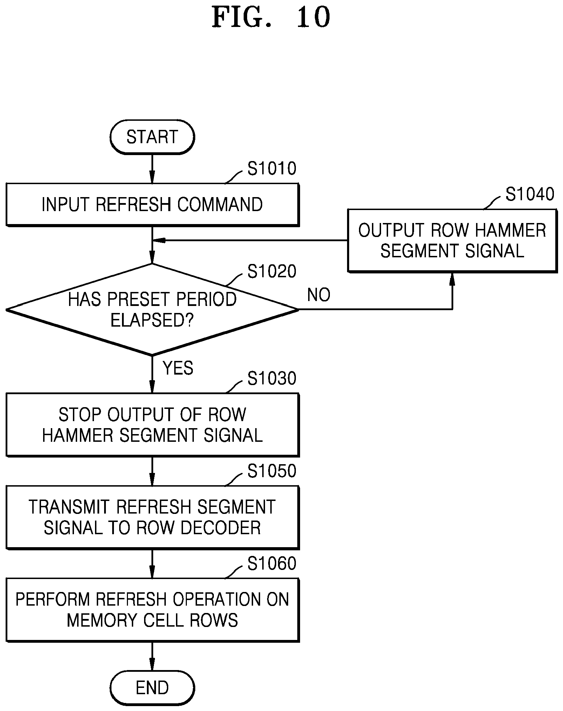

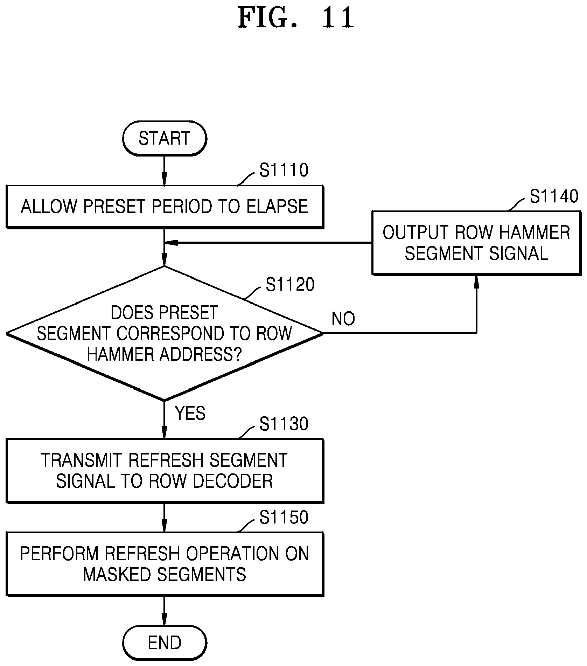

FIGS. 10 and 11 are flowcharts illustrating a refresh operation of a memory device according to some example embodiments.

Referring to FIG. 10, a refresh command may be input to the memory device 100 according to some example embodiments (S1010). A memory controller according to some example embodiments may access the memory device 100 according to a request of a host. For example, the memory controller may transmit a refresh command to the memory device 100 based on a request of the host.

When the refresh command is input, the memory device 100 according to some example embodiments may determine whether or not a preset (or, alternatively, desired or determined) period has elapsed (S1020). The preset (or, alternatively, desired or determined) period according to some example embodiments may be set differently according to information of the memory device 100.

When it is determined that the preset (or, alternatively, desired or determined) period has elapsed, the memory device 100 according to some example embodiments may stop outputting the row hammer segment signal (S1030). For example, when the preset (or, alternatively, desired or determined) period is reached, the memory device 100 according to some example embodiments may stop outputting the row hammer segment signal RH_SEG and perform a refresh operation based on the refresh segment signal FREF, regardless of a segment masking operation. However, when it is determined that the preset (or, alternatively, desired or determined) period has not elapsed, the memory device 100 according to some example embodiments may continue to output the row hammer segment signal (S1040).

The memory device 100 according to some example embodiments may transmit the refresh segment signal to a row decoder (S1050). The refresh segment signal FREF according to some example embodiments may be transmitted with a logic value of LOW. According to some example embodiments, when the logic value of the refresh segment signal FREF is LOW and the output of the row hammer segment signal RH_SEG is stopped, the segment mask signal SEGMASK may not be output.

When the refresh segment signal is transmitted to the row decoder, the memory device 100 according to some example embodiments may perform a refresh operation on the memory cell rows (S1060). In a preset (or, alternatively, desired or determined) period, the memory device 100 according to some example embodiments may ignore the segment mask signal and perform a refresh operation on memory cell rows on which a masking operation has been performed. Additionally, by using the above example embodiments, data may be more securely stored and the ability of malicious actors to access sensitive data, confidential data, technical data, etc., of the storage devices may be decreased and/or have reduced ability.

Referring to FIG. 11, the memory device 100 according to some example embodiments may determine whether or not a preset (or, alternatively, desired or determined) period has elapsed (S1 110).

When it is determined that the preset (or, alternatively, desired or determined) period has elapsed, the memory device 100 according to some example embodiments may determine whether or not a preset (or, alternatively, desired or determined) segment corresponds to a row hammer address (S1120).

When it is determined that the preset (or, alternatively, desired or determined) segment corresponds to the row hammer address, the memory device 100 according to some example embodiments may transmit the refresh segment signal to a row decoder (S1130). The refresh segment signal FREF according to some example embodiments may be transmitted with a logic value of LOW. According to some example embodiments, when the logic value of the refresh segment signal FREF is LOW and the output of the row hammer segment signal RH_SEG is stopped, the segment mask signal SEGMASK may not be output.

However, when it is determined that the preset (or, alternatively, desired or determined) segment does not correspond to the row hammer address, the memory device 100 according to some example embodiments may continue to output the row hammer segment signal (S 1140).

When the refresh segment signal is transmitted to the row decoder, the memory device 100 according to some example embodiments may perform a refresh operation on masked segments (S 1150). In the preset (or, alternatively, desired or determined) period, the memory device 100 according to some example embodiments may ignore the segment mask signal and perform a refresh operation on memory cell rows on which a masking operation has been performed. Additionally, by using the above example embodiments, data may be more securely stored and the ability of malicious actors to access sensitive data, confidential data, technical data, etc., of the storage devices may be decreased and/or have reduced ability.

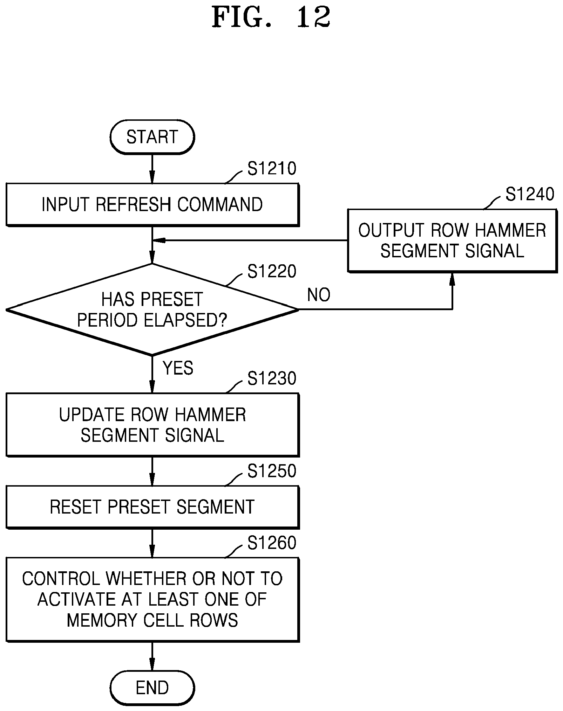

FIG. 12 is a flowchart illustrating a process of resetting a segment in the operating method of a memory device, according to some example embodiments.

Referring to FIG. 12, a refresh command may be input to the memory device 100 according to some example embodiments (S1210). A memory controller according to some example embodiments may access the memory device 100 according to a request of a host. For example, the memory controller may transmit a refresh command to the memory device 100 based on a request of the host.

When the refresh command is input to the memory device 100, the memory device 100 according to some example embodiments may determine whether or not a preset (or, alternatively, desired or determined) period has elapsed (S1220). The preset (or, alternatively, desired or determined) period according to some example embodiments may be set differently according to information of the memory device 100.

When it is determined that the preset (or, alternatively, desired or determined) period has elapsed, the memory device 100 according to some example embodiments may update the row hammer segment signal (S1230).

However, when it is determined that the preset (or, alternatively, desired or determined) period has not elapsed, the memory device 100 according to some example embodiments may output the row hammer segment signal (S 1240).

When the row hammer segment signal is updated, the memory device 100 according to some example embodiments may reset a preset (or, alternatively, desired or determined) segment (S1250).

For example, when the preset (or, alternatively, desired or determined) period has elapsed, a refresh operation may be performed on masked segments based on the refresh segment signal, and a masking region among the memory cell rows may be reset. When the masking region is reset, the memory device 100 according to some example embodiments may perform a refresh operation on the memory cell rows based on the updated row hammer segment signal RH_SEG.

When the preset (or, alternatively, desired or determined) segment is reset, the memory device 100 according to some example embodiments may control whether or not to activate at least one of the memory cell rows (S1260).

For example, the memory device 100 may transmit the row hammer segment signal to a row decoder, and the row decoder may generate a word line enable signal based on the updated row hammer segment signal. The memory device 100 according to some example embodiments may deactivate a word line that is set as a masking region, among the memory cell rows, based on the word line enable signal, and the refresh control circuit 132 may activate word lines that are not masked.

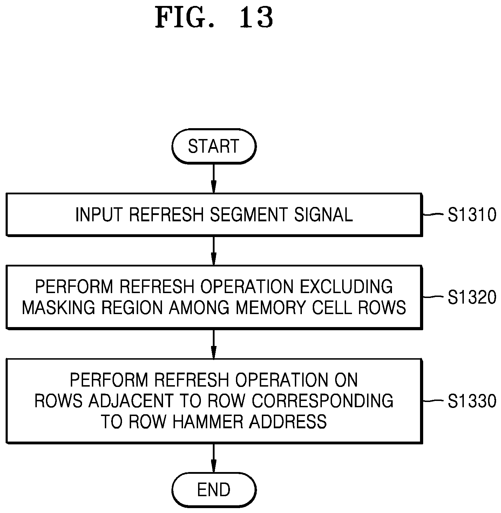

FIG. 13 is a flowchart illustrating a process of performing a refresh operation on rows adjacent to a row hammer address in the operating method of a memory device, according to some example embodiments.

Referring to FIG. 13, the refresh segment signal may be input to a refresh control circuit of the memory device 100 according to some example embodiments (S1310). A logic value of the refresh segment signal according to some example embodiments may be HIGH or LOW.

When the refresh segment signal is input, the memory device 100 according to some example embodiments may perform a refresh operation excluding a masking region among the memory cell rows (S1320).

According to some example embodiments, when the logic value of the refresh segment signal is HIGH, the segment mask signal may be output and a refresh operation may not be performed on a masked segment. However, according to some example embodiments, when the logic value of the refresh segment signal is LOW and the output of the row hammer segment signal is stopped, the segment mask signal may not be output.

The memory device 100 according to some example embodiments may perform a refresh operation on rows adjacent to a row corresponding to a row hammer address (S1330). For example, by performing the refresh operation on the rows adjacent to the row corresponding to the row hammer address, the memory device 100 may pursue stability of adjacent memory cell rows. For example, when a row hammer attack occurs in an Nth row, the memory device 100 may control a refresh operation to be performed also on a N+1th row and a N-1th row. However, rows adjacent to the Nth row are not limited to the N+1th row and the N-1th row, and may further include memory cell rows that may be affected by electrical characteristics.

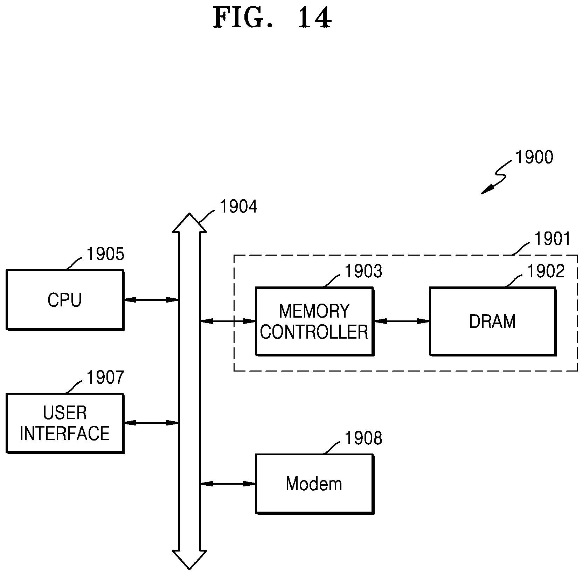

FIG. 14 is a block diagram illustrating a computer system to which a memory device according to some example embodiments is applied.

Referring to FIG. 14, a computer system 1900 may be mounted on a mobile device or a desktop computer. The computer system 1900 may include a DRAM memory system 1901 electrically connected to a system bus 1904, a CPU 1905, a user interface 1907, and a modem 1908 such as a baseband chipset. The computer system 1900 may further include an application chipset, a camera image processor (CIS), an I/O device, and the like.

The user interface 1907 may be an interface for sending data to or receiving data from a communication network. The user interface 1907 may be wired or wireless and may include an antenna or a wired or wireless transceiver. Data provided through the user interface 1907 or the modem 1908 or data processed by the CPU 1905 may be stored in the DRAM memory system 1901.

The DRAM memory system 1901 may include the memory device described above with reference to FIGS. 1 to 13. The DRAM memory system 1901 may include DRAM 1902 and a memory controller 1903. Data processed by the CPU 1905 or data input from the outside are stored in the DRAM 1902. The DRAM 1902 may determine whether or not to additionally perform a row hammer handling operation, and based on the determination, adjust the number of row hammer handling operations on a memory cell array.

When the computer system 1900 is a device for performing wireless communication, the computer system 1900 may be used in a communication system such as code division multiple access (CDMA), global system for mobile communication (GSM), North American multiple access (NADC), or CDMA2000. The computer system 1900 may be mounted on an information processing device such as a PDA, a portable computer, a web tablet, a digital camera, a PMP, a mobile phone, a wireless phone, or a laptop computer.

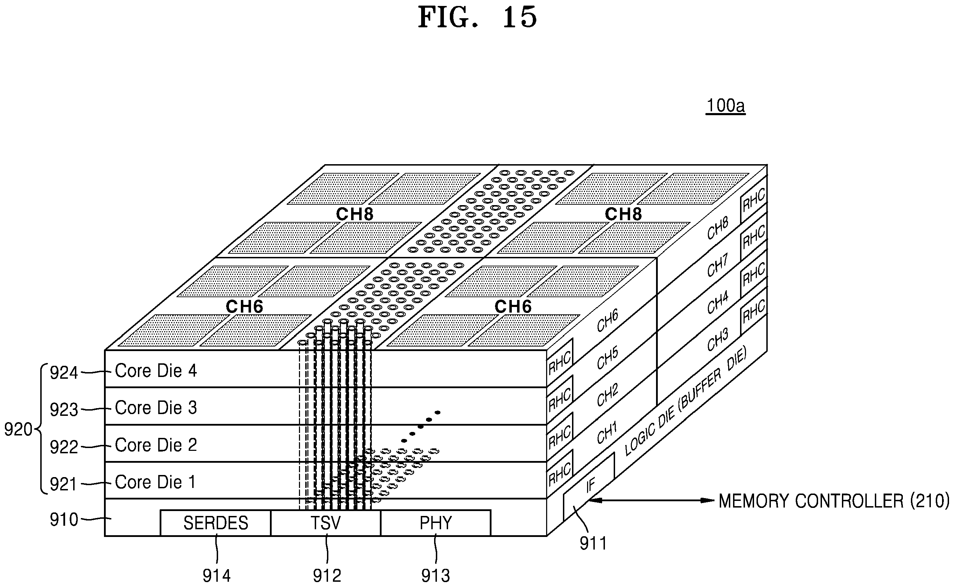

FIG. 15 is a diagram illustrating a memory device for controlling row hammer, according to some example embodiments.

FIG. 15 illustrates the memory device 100 of FIG. 1 implemented in high bandwidth memory (HBM). It may be noted that the HBM configuration illustrated in FIG. 15 is provided as an example and is not necessarily an actual HBM configuration. In addition, the HBM configuration illustrated in FIG. 15 as an example does not represent or suggest limitations to the inventive concept. Hereinafter, subscripts (e.g., a in 100a) attached to the same reference numerals in different drawings are used to distinguish a plurality of circuits having similar or identical functions. For convenience of description, a memory device 100a may be interchangeably referred to as an HBM 100a.

Referring to FIGS. 1 and 15, the HBM 100a may be connected to the host 200 (and further the memory controller 210) through an HBM protocol of the JEDEC standard. The HBM protocol is a high-performance random access memory (RAM) interface for three-dimensional stacked memories (e.g., DRAM). The HBM 100a generally achieves a wider bandwidth, while consuming less power, in a substantially smaller form factor than other DRAM technologies (e.g., DDR4, GDDR5, etc.).

The HBM 100a may have a high bandwidth by including a plurality of channels, for example, first to eighth channels CH1 to CH8 having interfaces independent from each other. The HBM 100a may include a plurality of dies, for example, a logic die (or buffer die) 910 and one or more core dies 920 stacked on the logic die 910. Although FIG. 15 illustrates an example in which first to fourth core dies 921 to 924 are included in the HBM 100a, the number of core dies 920 may be variously changed. The core dies 920 may be referred to as memory dies.

Each of the first to fourth core dies 921 to 924 may include one or more channels. FIG. 15 illustrates an example in which each of the first to fourth core dies 921 to 924 includes two channels so that the HBM 100a has eight channels, for example, the first to eighth channels CH1 to CH8. For example, the first core die 921 may include the first and third channels CH1 and CH3, the second core die 922 may include the second and fourth channels CH2 and CH4, the third core die 923 may include the fifth and seventh channels CH5 and CH7, and the fourth core die 924 may include the sixth and eighth channels CH6 and CH8.

The logic die 910 may include an interface circuit 911 communicating with the host 200 and may receive a command/address and data from the host 200 through the interface circuit 911. The host 200 may transmit the command/address and the data through buses arranged to correspond to the first to eighth channels CH1 to CH8, and the buses may be formed to be divided for each channel, or some buses may be shared by at least two channels. The interface circuit 911 may transmit the command/address and the data to a channel through which the host 200 requests a memory operation or arithmetic processing. In addition, according to some example embodiments, each of the core dies 920 or each of the first to eighth channels CH1 to CH8 may include a processor-in-memory (PIM) circuit.

The host 200 may provide the command/address and the data such that at least some of a plurality of arithmetic tasks or kernels may be performed by the HBM 100a, and a PIM circuit of a channel designated by the host 200 may perform arithmetic processing. For example, when the received command/address indicates arithmetic processing, the PIM circuit of a corresponding channel may perform the arithmetic processing by using write data provided from the host 200 and/or data read from the corresponding channel. In another example, when the command/address received by a corresponding channel of the HBM 100a indicates a memory operation, a data access operation may be performed.

According to some example embodiments, each of the first to eighth channels CH1 to CH8 may include a plurality of banks, and a PIM circuit of each of the first to eighth channels CH1 to CH8 may include one or more processing elements. For example, the number of processing elements in each of the first to eighth channels CH1 to CH8 may be equal to the number of banks, or one processing element may be shared among at least two banks when the number of processing elements is less than the number of banks. The PIM circuit of each of the first to eighth channels CH1 to CH8 may execute a kernel offloaded by the host 200.

According to some example embodiments, each of the first to eighth channels CH1 to CH8 may include the refresh control circuit described with reference to FIGS. 1 to 13. Each of the first to eighth channels CH1 to CH8 may include a logic circuit indicating a correlation between a row address accessed during a row hammer monitoring time frame and an access number, and the logic circuit may include an address table storing a first address entry and a first access number corresponding to a first row address. Each of the first to eighth channels CH1 to CH8 may perform a flattening operation and a random selection operation by which the first address entry is swapped with a second address entry having a second access number that is the smallest value in the address table and may randomly perform a random swap operation by which the first address entry is swapped with a third address entry having a third access number that is not the greatest value in the address table. Accordingly, each of the first to eighth channels CH1 to CH8 may prevent or reduce an address entry having a small access number from being evicted from registers and prevent or reduce a hacker-pattern row hammer attack from being easily performed.

The logic die 910 may further include a through silicon via (TSV) region 912, an HBM physical layer interface (HBM PHY) region 913, and a serializer/deserializer (SERDES) region 914. The TSV region 912 is a region in which a TSV for communication with the core dies 920 is formed and is a region in which the buses arranged to correspond to the first to eighth channels CH1 to CH8 are formed. When each of the first to eight channels CH1 to CH8 has a bandwidth of 128 bits, TSVs may include configurations inputting and outputting data of 1024 bits.

The HBM PHY region 913 may include a plurality of I/O circuits for communication with the memory controller 112 and the first to eight channels CH1 to CH8, and for example, the HBM PHY region 913 may include one or more interconnect circuits for connecting the first to eighth channels CH1 to CH8 to the memory controller 210. The HBM PHY region 913 may include a physical or electrical layer and a logical layer provided for signals, frequencies, timing, driving, detailed operating parameters, and functionality required for efficient communication between the memory controller 112 and the first to eighth channels CH1 to CH8. The HBM PHY region 913 may perform memory interfacing such as selecting a row and a column corresponding to a memory cell for a corresponding channel, writing data into the memory cell, or reading the written data from the memory cell. The HBM PHY region 913 may support features of the HBM protocol of the JEDEC standard.

The SERDES region 914 is a region for providing a SERDES interface of the JEDEC standard as processing throughput of a processor of the host 200 increases and as requirements for a memory bandwidth increase. The SERDES region 914 may include a SERDES transmitter, a SERDES receiver, and a controller. The SERDES transmitter may include a parallel-to-serial circuit and a transmitter, receive a parallel data stream, and serialize the received parallel data stream. The SERDES receiver may include a reception amplifier, an equalizer, a clock and data recovery circuit, and a serial-to-parallel circuit, receive a serial data stream, and parallelize the received serial data stream. The controller may include an error detection circuit, an error correction circuit, and registers such as first in first out (FIFO).

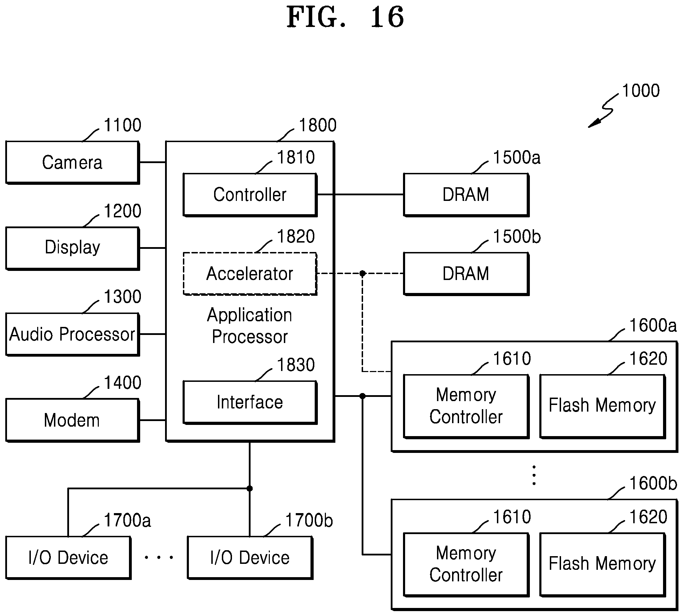

FIG. 16 is a block diagram illustrating a system including a memory device for controlling row hammer according to some example embodiments.

Referring to FIG. 16, a system 1000 may include a camera 1100, a display 1200, an audio processor 1300, a modem 1400, DRAMs 1500a and 1500b, flash memories 1600a and 1600b, I/O devices 1700a and 1700b, and an AP 1800. The system 1000 may implemented as a laptop computer, a mobile phone, a smartphone, a tablet personal computer (PC), a wearable device, a healthcare device, or an internet of things (IOT) device. In addition, the system 1000 may be implemented as a server or a PC.

The camera 1100 may capture a still image or a moving image under control by a user and may store the captured image and image data or transmit the captured image and image data to the display 1200. The audio processor 1300 may process audio data included in content of the flash memories 1600a and 1600b or a network. The modem 1400 may transmit a modulated signal for wired/wireless data transmission/reception to a receiver, and the modulated signal may be demodulated by the receiver to restore the original signal. The I/O devices 1700a and 1700b may include devices providing a digital input function and/or a digital output function, such as a Universal Serial Bus (USB) or storage, a digital camera, a secure digital (SD) card, a digital versatile disc (DVD), a network adapter, and a touch screen.

The AP 1800 may control all operations of the system 1000. The AP 1800 may control the display 1200 such that a portion of content stored in the flash memories 1600a and 1600b is displayed on the display 1200. When a user input is received through the I/O devices 1700a and 1700b, the AP 1800 may perform a control operation corresponding to the user input. The AP 1800 may include an accelerator block, which is a dedicated circuit for artificial intelligence (AI) data operation, or may include an accelerator chip 1820 separately from the AP 1800. The DRAM 1500b may be additionally mounted in the accelerator block or the accelerator chip 1820. The accelerator block is a functional block that specializes in performing certain functions of the AP 1800 and may include a GPU which is a functional block specialized in processing graphics data, a neural processing unit (NPU) which is a block specialized in AI calculation and inference, and a data processing unit (DPU) which is a block specialized in data transmission.

The system 1000 may include the plurality of DRAMs 1500a and 1500b. The AP 1800 may control the DRAMs 1500a and 1500b through a command and an MRS conforming to the JEDEC standard, or perform communication by setting a DRAM interface protocol to use company-specific functions, such as a low voltage, a high speed, and reliability, and cyclic redundancy check (CRC)/error correction code (ECC) functions. For example, the AP 1800 may communicate with the DRAM 1500a through an interface conforming to the JEDEC standard, such as LPDDR4 or LPDDR5, and the accelerator block or the accelerator chip 1820 may perform communication by setting a new DRAM interface protocol to control the DRAM 1500b for an accelerator having a higher bandwidth than the DRAM 1500a.

Although FIG. 16 illustrates only the DRAMs 1500a and 1500b, the inventive concepts are not limited thereto. As long as a bandwidth, a response speed, and voltage conditions of the AP 1800 or the accelerator chip 1820 are satisfied, any memory such as phase-change RAM (PRAM), static RAM (SRAM), magnetic RAM (MRAM), resistive RAM (RRAM), ferroelectric RAM (FRAM), or Hybrid RAM may be used. The DRAMs 1500a and 1500b have relatively smaller latency and bandwidth than the I/O devices 1700a and 1700b or the flash memories 1600a and 1600b. The DRAMs 1500a and 1500b may be initialized when the system 1000 is powered on, used as temporary storages for an operating system and application data when the operating system and the application data are loaded, or used as execution spaces for various software code.

The DRAMs 1500a and 1500b may perform four arithmetic operations including addition, subtraction, multiplication, and division, vector operations, address operations, or Fast Fourier Transform (FFT) operations may be performed. In addition, the DRAMs 1500a and 1500b may perform a function used for inference. Here, the inference may be performed in a deep learning algorithm using an artificial neural network. The deep learning algorithm may include a training operation of learning a model through various data and an inference operation of recognizing data by using the learned model. According to some example embodiments, an image captured by a user through the camera 1100 is signal-processed and stored in the DRAM 1500b, and the accelerator block or the accelerator chip 1820 may perform an AI data operation for recognizing data by using the data stored in the DRAM 1500b and a function used for inference.

The system 1000 may include a plurality of storages or flash memories 1600a and 1600b having a larger capacity than the DRAMs 1500a and 1500b. The accelerator block or the accelerator chip 1820 may perform a training operation and an AI data operation by using the flash memories 1600a and 1600b. According to some example embodiments, the flash memories 1600a and 1600b may efficiently perform a training operation and an inference AI data operation, performed by the AP 1800 and/or the accelerator chip 1820, by using a computing device included in a memory controller 1610. The flash memories 1600a and 1600b may store photos taken by the camera 1100 or data transmitted through a data network. For example, the flash memories 1600a and 1600b may store augmented reality/virtual reality, high definition (HD), or ultra-high definition (UHD) content.

In the system 1000, the DRAMs 1500a and 1500b may include the refresh control circuit described with reference to FIGS. 1 to 13. The DRAMs 1500a and 1500b may include a logic circuit indicating a correlation between a row address accessed during a row hammer monitoring time frame and an access number, and the logic circuit may include an address table storing a first address entry and a first access number corresponding to a first row address. The DRAMs 1500a and 1500b may perform a flattening operation and a random selection operation by which the first address entry is swapped with a second address entry having a second access number that is the smallest value in the address table and may randomly perform a random swap operation by which the first address entry is swapped with a third address entry having a third access number that is not the greatest value in the address table. Accordingly, the DRAMs 1500a and 1500b may prevent or reduce an address entry having a small access number from being evicted from registers and prevent or reduce a hacker-pattern row hammer attack from being easily performed.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

While the inventive concepts have been particularly shown and described with reference to example embodiments thereof, it will be understood that various changes in form and details may be made therein without departing from the scope of the following claims.

## Claims

1. A memory device comprising:
a memory cell array comprising a plurality of memory cell rows, the plurality of memory cell rows being grouped into a plurality of segments;
a row decoder connected to the plurality of memory cell rows; and
a refresh control circuit configured to generate a refresh control signal for controlling a refresh operation on the plurality of memory cell rows,
the refresh control circuit comprising
a first circuit configured to transmit, to the row decoder, a row hammer segment signal provided from outside of the memory device;
a second circuit configured to generate a refresh segment signal indicating a refresh operation on the plurality of segments; and
a third circuit configured to generate a segment mask signal based on the row hammer segment signal and the refresh segment signal, and
the refresh control circuit is further configured to, in a period during which the refresh segment signal is generated, control the memory cell array to unmask a memory cell region masked by the segment mask signal and selectively perform the refresh operation on the plurality of memory cell rows.

2. The memory device of claim 1, wherein, based on a segment corresponding to a row hammer address, the refresh control circuit is further configured to transmit the refresh segment signal to the row decoder.

3. The memory device of claim 1 or 2, wherein the refresh control circuit is further configured to stop outputting the row hammer segment signal in the period.

4. The memory device of any one of claims 1 to 3, wherein the refresh control circuit is further configured to, based on the period having elapsed, update the row hammer segment signal and reset a segment based on the updated row hammer segment signal.

5. The memory device of claim 4, wherein the refresh control circuit is further configured to control whether or not to activate at least one of the plurality of memory cells, based on the updated row hammer segment signal.

6. The memory device of claim 4 or 5, wherein the refresh control circuit is further configured to stop outputting the updated row hammer segment signal and output the refresh segment signal in the period.

7. The memory device of any one of claims 1 to 6, wherein the refresh control circuit is further configured to perform a refresh operation excluding a masking region among the plurality of the memory cell rows.

8. The memory device of any one of claims 1 to 7, wherein, based on a segment corresponding to a row hammer address, the refresh control circuit is further configured to perform a refresh operation on rows adjacent to a row corresponding to the row hammer address.

9. The memory device of any one of claims 1 to 8, wherein the refresh control circuit is further configured to perform an operation of a NOR gate to distinguish between the row hammer segment signal and the refresh segment signal.

10. The memory device of any one of claims 1 to 9, wherein the refresh control circuit further comprises a counter configured to count the period.

11. An operating method of a memory device for defending against a row hammer attack, the operating method comprising:
grouping a plurality of memory cell rows into a plurality of segments;
generating a refresh control signal for controlling a refresh operation on the plurality of memory cell rows; and
performing a refresh operation on the plurality of segments based on the refresh control signal,
the generating of the refresh control signal comprising
generating a row hammer segment signal provided from outside of the memory device;
generating a refresh segment signal for indicating a refresh operation on the plurality of segments; and
generating a segment mask signal based on the row hammer segment signal and the refresh segment signal,
the performing of the refresh operation on the plurality of segments comprises selectively performing the refresh operation on the memory cell rows based on the segment mask signal.

12. The operating method of claim 11, wherein
based on a segment corresponding to a row hammer address, the generating of the segment mask signal comprises transmitting the refresh segment signal to a row decoder, and
the performing of the refresh operation on the plurality of segments further comprises performing a refresh operation on masked segments.

13. The operating method of claim 11 or 12, wherein the generating of the refresh control signal further comprises stopping output of the row hammer segment signal in a period.

14. The operating method of claim 11 or 12, wherein, based on a period having elapsed, the generating of the refresh control signal further comprises:
updating the row hammer segment signal; and
resetting a segment based on the updated row hammer segment signal.

15. A memory system comprising:
a memory device; and
a memory controller configured to transmit a refresh command to the memory device,
the memory device comprising
a memory cell array comprising a plurality of memory cell rows, the plurality of memory cell rows being grouped into a plurality of segments;
a row decoder connected to the plurality of memory cell rows; and
a refresh control circuit configured to generate a refresh control signal for controlling a refresh operation on the plurality of memory cell rows, based on the refresh command,
the refresh control circuit comprising
a first circuit configured to generate a row hammer segment signal provided from outside of the memory device;
a second circuit configured to generate a refresh segment signal for indicating a refresh operation on the plurality of segments; and
a third circuit configured to generate a segment mask signal based on the row hammer segment signal and the refresh segment signal,
the refresh control circuit further configured to selectively perform the refresh operation on the plurality of memory cell rows based on the segment mask signal.
